# EUROPEAN PATENT SPECIFICATION

(11) **EP 1 751 901 B1**
(45) Date of publication and mention of the grant of the patent: **05.03.2014**
(21) Application number: 05737958.8
(22) Date of filing: 17.05.2005
(51) Int. Cl.: H04L 1/00

(54) **TRANSPORT CHANNEL DECODING MANAGEMENT IN A UMTS MOBILE RECEIVER**
TRANSPORTKANAL-DECODIERUNGSVERWALTUNG IN EINEM UMTS-MOBILEMPFÄNGER
GESTION PAR DECODAGE D'UN CANAL DE TRANSMISSION DANS UN RECEPTEUR MOBILE UMTS

(30) Priority: 18.05.2004 EP 04300291
(43) Date of publication of application: 14.02.2007
(73) Proprietor: ST-Ericsson SA, 1228 Plan-les-Ouates (CH)
(72) Inventor: ARDICHVILI, Emmanuel, 75008 Paris (FR); MIELO, Olivier J. S., 75008 Paris (FR)
(74) Representative: Schuffenecker, Thierry
(86) International application number: PCT/IB2005/051594
(87) International publication number: WO 2005/112324

(56) References cited:
- US-A1- 2004 014 447
- WOODARD J ET AL: "IMPLEMENTATION OF CHANNEL DECODING AND OTHER BIT RATE PROCESSING ALGORITHMS FOR 3RD GENERATION W-CDMA MOBILE TERMINALS" VTC 2001 SPRING. IEEE VTS 53RD. VEHICULAR TECHNOLOGY CONFERENCE. RHODES, GREECE, MAY 6 - 9, 2001, IEEE VEHICULAR TECHNOLGY CONFERENCE, NEW YORK, NY : IEEE, US, vol. VOL. 4 OF 4. CONF. 53, 6 May 2001 (2001-05-06), pages 2685-2689, XP001071241 ISBN: 0-7803-6728-6
- WALKER W ET AL: "INTERRUPT PROCESSING IN CONCURRENT PROCESSORS" COMPUTER, IEEE COMPUTER SOCIETY, LONG BEACH., CA, US, US, vol. 28, no. 6, 1 June 1995 (1995-06-01), pages 36-46, XP000515508 ISSN: 0018-9162

## Description

### Field of invention

The present invention relates to a receiver comprising a data link handler in a digital communications system. The present invention also relates to a method of data link handling, and a data link handler in a digital communications system.

### Background of the invention

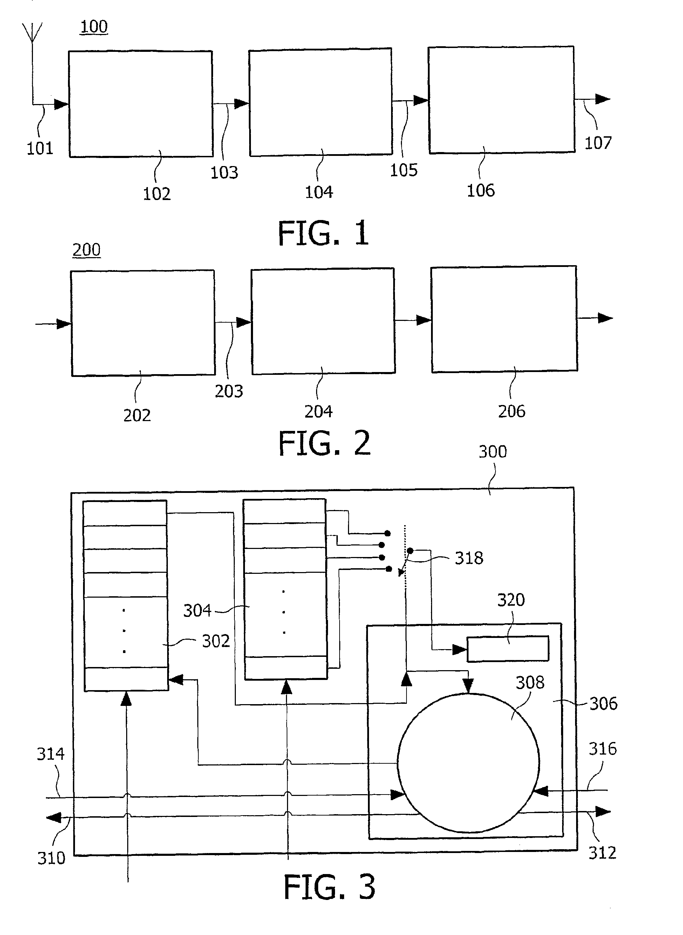

Fig. 1 shows a conventional Universal Mobile Telecommunications System (UMTS) receiver 100 comprising a means 102 for transforming a radio-frequency signal 101 into a baseband signal 103, a demodulator 104 for demodulating the baseband signal 103, and a means 106 for deinterleaving, rate matching and decoding the demodulated signal 105. The means 106 for deinterleaving, rate matching and decoding the demodulated signal 105 work in the data link layer, which is a term used in the Open System Interconnection model which is known to a person skilled in the art, and is therefore referred to as a data link handler 106. The data link handler 106 output 107 is applied to further parts (not shown) of the UMTS receiver 100 for higher layer processing.

Fig.2 shows a conventional data link handler 200 comprising a deinterleaver 202, a rate matcher 204 and one or more decoders 206. The one or more decoders 206 can be arranged in series or parallel, or any combination thereof. In the signal path 203 between the deinterleaver 202 and the rate matcher 204, a deinteleaver output buffer (not shown) is normally provided. Information about interleaving, rates, and codes is specified in 3GPP TS 25.212, which specifies multiplexing and channel coding for Frequency Division Duplexing (FDD) within UMTS, and a person skilled in the art is well aware of this specification.

For every frame, the data link handler receives blocks of data from the demodulator. Processing of the data blocks corresponding to a frame in the data link handler is to start when data is ready in an output buffer of the demodulator, and has to be ready before data corresponding to a next frame is ready in the output buffer of the demodulator. Thus, on the one hand the processing in the data link handler is data driven. On the other hand, the settings are controlled by a Central Processing Unit (CPU, not shown) of the receiver.

US2003/0037749-Al discloses a method and user equipment for processing received data in user equipment connected to a communications network such that the load on the receiver is decreased. The processing comprises receiving radio frames, identifying transport block sizes of the radio frame, and determining whether the radio frame includes transport blocks that are directed to the user equipment. Blocks associated to transport channels not directed to the user equipment are not processed.

US 2004/0014447 A1 wherein the preamble of claim 1 is based discloses physical layer transport composite processing system. The processing system includes a plurality of processors and a shared memory interconnected via a system bus. The shared memory is controlled by a control processor. One of the processors is a receive transport channel processor including a de-interleaver , a de-rate-matcher and two decoders. The shared memory contains address registers and the sequencing logic necessary to allow all of the virtual circuits and processors to efficiently share access to the memory.

Woodard J et al, "Implementation of channel decoding and other bit rate processing algorithms for 3rd generation W-CDMA mobile terminals", VTC 2001 spring, IEEE VTS 53rd, vehicular technology conference, New York: IEEE, US, vol.4 of 4, conf. 53, 6 May 2001 (2001-05-06), pages 2685-2689, XP001071241, ISBN: 0-7803-6728-6 discloses bit rate processing operations and their real-time implementation in soft- and hardware. In detail, the paper discusses the issues involved in the fixed-point implementation of turbo and Viterbi decoders, and the other bit rate processing operations.

A problem of the prior art is the requirements in terms of latency and processing power for a device scheduling the data processing units, particularly in case this device is also used for other time-constrained tasks in the system.

### Summary of the invention

An object of the present invention is to provide a solution with improved data link layer processing.

The above object is achieved according to a first aspect of the present invention by a receiver in a digital communications system, which system comprises a data link handler comprising a deinterleaver, a rate matcher and at least one decoder. The deinterleaver is arranged to apply deinterleaved data comprising a plurality of transport channels via a buffer to the rate matcher, and the rate matcher is arranged to convey rate matched data to said at least one decoder. The receiver is characterized in that the deinterleaver, the rate matcher, and said one or more decoders each comprise a shadow register, a task register, and a handshaking means for managing data flow between them. The shadow register is arranged to hold parameter values representing characteristics of the transport channels for data link layer processing, and the task register is arranged to hold a list of transport channels to be processed.

An effect is release of constraints in terms of latency for a device responsible for scheduling and control of the receiver. Generally, this device is a CPU or DSP coupled to the data link handler, and this CPU or DSP normally manages other subsystems. Thus, an advantage is that the proposed architecture allows scheduling flexibility for the part related to the data link handler.

An advantage is that requirements on processing power are decreased since a CPU or a DSP of the receiver is relieved from handling data flow in the data link handler. This implies a low CPU requirement and low latency solution with maintained flexibility. An advantage of the task register is that the data link handler can be data driven more easily, i.e. once the CPU or DSP has programmed the shadow registers, processing can start as soon as corresponding data is present, since the data link handler knows in advance the transport channels that are to be processed. An advantage of the shadow register is that parameter values can be pre-programmed in the data link handler. In effect, this enables processing with reduced involvement of the receiver's CPU or DSP, since necessary parameter values for data link layer processing are programmed batch-wise.

The task register may be arranged to shift said list according to a first in first out principle, where the output of said task register indicates the transport channel to be processed.

An advantage of this is enabling of an efficient implementation where tasks in the form of identifiers of the traffic channels to be processed are loaded into the input of the first in first out register, and the identifier of the traffic channel to be processed is present on the output.

The handshaking means may be arranged to signal an indication comprising information to a next processing unit that a data block is ready for reading and that a data block is read to indicate to a previous processing unit that space is free for a next data block.

An advantage of this is provision of means for autonomous flow control between processing parts of the data link handler.

Each deinterleaver, rate matcher, and said at least one decoder may further comprise a processing unit, wherein the processing unit is arranged to control shifting of the task register, selection from the shadow register, and signalling on the handshaking means.

The processing unit may comprise a state machine, arranged to generate control signals for controlling the shifting of the task register, selection from the shadow register, and signalling on the handshaking means.

The above object is obtained according to a second aspect of the present invention by a method of processing transport channel data in a data link handler in a digital communications system, comprising the processing steps of: deinterleaving data comprising a plurality of transport channels; rate matching deinterleaved data; and decoding rate matched data. Each of the processing steps comprises the steps of: reading data; providing an indication that contains information that data is read; shifting a task register that contains a list of transport channels, wherein the task register comprises a list of transport channels to be processed; processing the data according to parameter values that represent characteristics of the transport channel in a shadow register indicated by an output of said task register; and providing an indication that contains information that processed data is to be read.

The step of shifting may be a first in first out shift.

The method may further comprise the step of programming the shadow registers with the parameter values.

Each processing step may comprise the steps of:
controlling said reading, indication providing, shifting, and processing steps by a state machine.

The advantages of the second aspect of the invention are similar to those of the first aspect.

### Brief description of the drawings

The above, as well as additional objects, features and advantages of the present invention, will be better understood through the following illustrative and non-limiting detailed description of preferred embodiments of the present invention, with reference to the appended drawings, wherein:
Fig. 1 shows a conventional UMTS receiver;
Fig.2 shows a conventional data link handler for a UMTS receiver;
Fig.3 shows a processing means comprising a means for controlling data flow in a data link handler according to an embodiment of the present invention;
Fig.4 is a flow chart illustrating a method of processing data blocks in a data link layer according to an embodiment of the present invention; and
Fig. 5 is a flow chart illustrating data block handling in a processing step according to an embodiment of the present invention.

### Detailed description of preferred embodiments

The basic approach according to the present invention is to add features to existing processing blocks to allow data block processing with no extra latency, while improving the performance of data block handling and decreasing the processing power requirements, particularly on digital signal processors (DSP) and/or central processing units (CPU) of the receiver. The embodiments described below are described in relation to a UMTS receiver. However, the basic principle can be used in receivers adapted to other digital communications systems, such as CDMA2000, GSM, EDGE, NADC, GPRS, IS-95, cdmaOne, PDC, PHS, and short-link radio systems.

Fig.3 shows a processing means 300 capable of controlling data block flow in a data link handler according to an embodiment of the present invention. The processing means can be a deinterleaver, rate matcher, or decoder. Data flow control is performed by a task register 302, a shadow register 304, and a processing unit 306. The task register 302 comprises a first in first out (FIFO) shift register which is loaded by a CPU of the receiver with transport channel (TrCH) numbers to be processed. Along with shifting the task register, a TrCH number is provided, which indicates the TrCH to be processed. The shadow register 304 is loaded with parameter values for the processing of a TrCH. The output of the task register 302 gives the TrCH to be processed and the associated parameter values are collected from the shadow register 304. A state machine 308 of the processing unit 306 controls the shifting of the task register 302 and the collection of parameter values from the shadow register 304. The state machine 308 also generates indicator signals 310, 312. Indicator signal 310 indicates to a preceding processing means that data is read from the preceding processing means. Indicator signal 312 indicates to a subsequent processing means that data is ready for reading at an output. Similarly, the state machine receives corresponding indicator signals 314, 316 from preceding and subsequent processing means. This flow control is referred to as handshaking, and the mechanism is therefore referred to as a handshaking means. Selection of parameter values is illustrated as a selector 318 connected to the parallel output of the shadow register 304 controlled by the task register 302. The selection can be performed in a plurality of other ways, and the selector 318 should be interpreted in a functional way, rather than structural. The selected parameter values are stored in a processing unit register 320 of the processing unit 306. For the sake of clarity, the data flow per se and data processing means are omitted. Apart from the features described above, data processing and data flow per se are similar to a conventional data link handler.

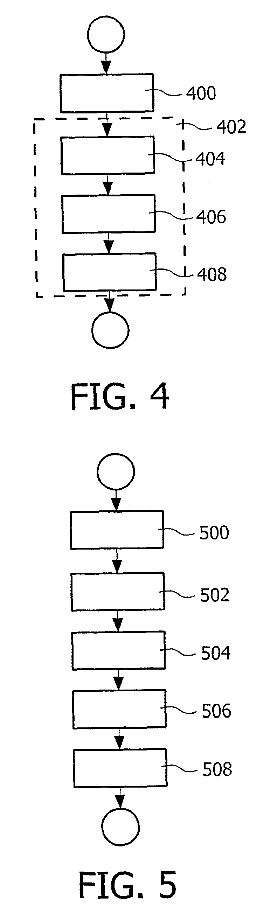

Fig.4 is a flow chart illustrating a method of processing data blocks in a data link layer according to an embodiment of the present invention. The method comprises a shadow register programming step 400 and a plurality of processing steps 402. The shadow register progamming step comprises loading parameter values to the shadow register of a processing means. The values are loaded by a controller of the receiver, e.g. a DSP or a CPU. The parameter values are to be used by a processing unit of the processing means for processing data according to an actual TrCH.

The plurality of processing steps 402 comprise a data block deinterleaving step 404, a data block rate matching step 406, and a data block decoding step 408.

Fig.5 is a flow chart illustrating data block handling in a processing step according to an embodiment of the present invention. The data block handling comprises a data block reading step 500, a data block read indication step 502, a task register shifting step 504, a data block processing step 506, and a data ready-to-read indicating step 508. These steps are performed in each of the plurality of processing steps 402 in Fig. 4.

The data block reading step 500 reads a data block, which is a result from a preceding processing step. Once this is done, an indication is given to acknowledge reading of the data block in the data-block read indication step 502. The task register is shifted in the task-register shifting step 504 to output a next TrCH to be processed. This also involves pointing out and collecting parameter values from the shadow register. It should be noted that steps 502 and 504 can be performed in the reverse order, i.e. the handshake is ready for a while and then the processing is started by the writing in the task register. The parameter values are then used in the data block processing step 506, where the data associated to the TrCH is processed. The processing can comprise deinterleaving, rate matching, or decoding. Once the data associated to the TrCH is processed, a signal is generated in the data ready-to-read indicating step 508 to indicate that a processed data block is to be read at an output so as to be further processed by a subsequent processing step.

## Claims

1. A receiver in a digital communications system, comprising a data link handler (106) comprising a deinterleaver (202), a rate matcher (204) and at least one decoder (206), wherein said deinterleaver (202) is arranged to apply deinterleaved data (203) comprising a plurality of transport channels via a buffer to said rate matcher (204), and said rate matcher (204) is arranged to convey rate matched data to said at least one decoder (206), **characterized in that** said deinterleaver (202), said rate matcher (204), and said one or more decoders (206) each comprises a shadow register (304), a task register (302), and a handshaking means (306) for managing data flow between them, wherein said shadow register (304) is arranged to hold parameter values representing characteristics of the transport channels for data link layer processing, and wherein said task register (302) is arranged to hold a list of transport channels to be processed.

2. A receiver according to claim 1, wherein said task register (302) is arranged to shift said list according to a first in first out principle, where the output of said task register (302) indicates the transport channel to be processed.

3. A receiver according to claim 1 or 2, wherein said handshaking means (306) are arranged to signal an indication (310, 312) comprising information that a data block is ready for reading and that a data block is read.

4. A receiver according to any one of claims 1 to 3, wherein said deinterleaver (202), said rate matcher (204) and said at least one decoder (206) each further comprises a processing unit, wherein said processing unit is arranged to control shifting of said task register (302), selection from said shadow register (304), and signaling on said handshaking means (306).

5. A receiver according to claim 4, wherein said processing unit comprises a state machine, arranged to generate control signals for controlling said shifting of said task register (302), selection from said shadow register (304), and signaling on said handshaking means (306).

6. A method of processing transport channel data in a data link handler in a digital communications system, comprising the processing steps of:
deinterleaving data (404) comprising a plurality of transport channels;
rate matching deinterleaved data (406); and
decoding rate matched data (408), wherein each of said processing steps comprises the steps of:
reading data (500);
providing an indication (502) that contains information that data is read;
shifting a task register (504) that contains a list of transport channels, wherein said task register comprises a list of transport channels to be processed;
processing said data (506) according to parameter values that represent characteristics of the transport channel in a shadow register indicated by an output of said task register; and
providing an indication (508) that contains information that processed data is to be read.

7. A method according to claim 6, wherein said step of shifting is a first in first out shift.

8. A method according to any one of claims 6 or 7, further comprising the step of programming said shadow registers with said parameter values.

9. A method according to any one of claims 6 to 8, wherein each processing step comprises the step of controlling said reading, indication providing, shifting, and processing steps by a state machine.

## Patentansprüche

1. Empfänger in einem digitalen Kommunikationssystem, das einen Datenverbindungs-Treiber (106) umfasst, umfassend eine Entschachtelungs-Einrichtung (202), einen Frequenz-Angleicher (204) und mindestens eine Entschlüsselungs-Einrichtung (206), wobei die Entschachtelungs-Einrichtung (202) ausgelegt ist, um entschachtelte Daten (203) mit einer Mehrzahl von Transport-Kanälen über einen Pufferspeicher an den Frequenz-Angleicher (204) anzulegen, und wobei der Frequenz-Angleicher (204) ausgelegt ist, um die in der Frequenz angeglichenen Daten an die mindestens eine Entschlüsselungs-Einrichtung (206) zu übermitteln, **dadurch gekennzeichnet, dass** die Entschachtelungs-Einrichtung (202), der Frequenz-Angleicher (204) und die eine oder mehrere Entschlüsselungs-Einrichtung(en) (206) jeweils ein Shadow-Register (304), ein Task-Register (302) und eine Handshaking-Einrichtung (306) aufweisen, um einen Datenstrom zwischen diesen zu steuern, wobei das Shadow-Register (304) ausgelegt ist, um Parameterwerte, die Eigenschaften der Transport-Kanäle repräsentieren, für eine Datenverbindungs-Schichtverarbeitung zu halten bzw. zu speichern, und wobei die Task-Register (302) ausgelegt sind, um eine Liste von zu verarbeitenden Transport-Kanälen zu halten bzw. zu speichern.

2. Empfänger nach Anspruch 1, wobei das Task-Register (302) ausgelegt ist, um die Liste gemäß einem FIFO-Prinzip zu schieben, wobei der Ausgang des Task-Registers (302) den zu verarbeitenden Transport-Kanal anzeigt.

3. Empfänger nach Anspruch 1 oder 2, wobei die Handshaking-Einrichtungen (306) ausgelegt sind, um eine Anzeige (310, 312) mit einer Information, dass ein Datenblock bereit für einen Lesevorgang ist und dass ein Datenblock gelesen wird, zu signalisieren.

4. Empfänger nach einem der Ansprüche 1 bis 3, wobei die Entschachtelungs-Einrichtung (202), der Frequenz-Angleicher (204) und die mindestens eine Entschlüsselungs-Einrichtung (206) jeweils weiterhin eine Verarbeitungseinheit umfassen, wobei die Verarbeitungseinheit ausgelegt ist, um ein Schieben des Task-Registers (302), eine Auswahl aus dem Shadow-Register (304) und ein Signalisieren auf der Handshaking-Einrichtung (306) zu steuern.

5. Empfänger nach Anspruch 4, wobei die Verarbeitungseinheit eine Zustands-Einrichtung umfasst, die ausgelegt ist, um Steuersignale zum Steuern des Schiebens des Task-Registers (302), eine Auswahl aus dem Shadow-Register (304) und ein Signalisieren auf der Handshaking-Einrichtung (306) zu erzeugen.

6. Verfahren zum Verarbeiten von Transport-Kanaldaten in einem Datenverbindungs-Treiber (106) in einem digitalen Kommunikationssystem, mit den Schritten:
Entschachtelung von Daten (404), die eine Mehrzahl von Transport-Kanälen aufweisen;
Anpassen der Frequenzen von entschachtelten Daten (406); und
Entschüsseln von in der Frequenz angepassten Daten (408), wobei jeder der Verarbeitungsschritte die Schritte umfasst:
Lesen von Daten(500);
Bereitstellen einer Anzeige (502), die Information enthält, dass Daten gelesen werden;
Schieben eines Task-Registers (504), das eine Liste von Transport-Kanälen enthält, wobei das Task-Register eine Liste von zu verarbeitenden Transport-Kanälen umfasst;
Verarbeiten der Daten (506) entsprechend Parameterwerten, die Eigenschaften des Transport-Kanals in einem Shadow-Register repräsentieren, die durch eine Ausgabe des Task-Registers angezeigt werden; und
Bereitstellen einer Anzeige (508), die Information enthält, dass die verarbeiteten Daten gelesen werden sollen.

7. Verfahren nach Anspruch 6, wobei der Schritt des Schiebens eine FIFO-Verschiebung ist.

8. Verfahren nach einem der Ansprüche 6 oder 7, weiterhin umfassend den Schritt des Programmierens der Shadow-Register mit den Parameterwerten.

9. Verfahren nach einem der Ansprüche 6 bis 8, wobei jeder Verarbeitungsschritt den Schritt des Steuerns des Lesens, des Bereitstellens der Anzeige, des Schiebens und der Verarbeitungsschritte durch eine Zustands-Einrichtung umfasst.

## Revendications

1. Un récepteur d'un système de communication numérique, comprenant un gestionnaire de lien de données (106) comportant un désentrelaceur (202), un adaptateur de vitesse (204) et au moins un décodeur (206), dans lequel ledit désentrelaçeur (202) est disposé de manière à appliquer des données déentrelacées (203) comprenant une pluralité de canaux de transport via une mémoire tampon vers ledit adaptateur de vitesse (204), et ledit adaptateur de vitesse (204) étant conçu pour convoyer des données à vitesse adaptée vers ledit décodeur au moins (206), **caractérisé en ce que** ledit désentrelaçeur (202), ledit adaptateur de vitesse (204), et ledit ou lesdits décodeur(s) (206) comportent chacun un registre fantôme (304), un registre de tâches (302), et des moyens de protocole d'échange de signaux (306) pour la gestion des flux de données entre eux, dans lequel ledit registre fantôme (304) est disposé pour le stockage de valeurs de paramètre représentatives des canaux de transports pour le traitement de la couche de lien de données, et dans lequel ledit registre de tâche (302) est conçu pour stocker une liste de canaux de transports devant être traités.

2. Un récepteur selon la revendication 1, dans lequel ledit registre de tâche (302) est conçu pour un décalage de ladite liste suivant un principe de premier arrivé, premier sorti, où la sortie dudit registre de tâche (302) indique le canal de transport devant être traité.

3. Un récepteur selon la revendication 1 ou 2, dans lequel lesdits moyens de protocole d'échange de signaux (306) sont conçus pour signaler une indication (310, 312) comprenant une information suivant laquelle un bloc de données est disponible en lecture et qu'un bloc de données est lue.

4. Un récepteur selon l'une quelconque des revendications 1 à 3, dans lequel ledit désentrelaceur (202), ledit adaptateur de vitesse (204) et ledit ou lesdits décodeur (206) comportent chacun une unité de traitement, dans lequel ladite unité de traitement est conçue pour la commande du décalage dudit registre de tâche (302), la sélection au sein du registre fantôme (304), et la signalisation sur lesdits moyens de protocole d'échanges de signaux (306).

5. Un récepteur selon la revendication 4, dans lequel ladite unité de traitement comporte une machine d'état, disposée pour générer des signaux de commande pour la commande dudit décalage dudit registre de tâches (302), la sélection au sein dudit registre fantôme (304), et la signalisation sur lesdits moyens de protocole d'échange de signaux (306).

6. Un procédé de traitement de données de canal de transport sur un gestionnaire de lien de données dans un système de communications numériques, comprenant les étapes :
le désentrelacement de données (404) comprenant une pluralité de canaux de transport ;
l'adaptation de vitesse de données désentrelacées (406) ; et
le décodage de données adaptées en vitesse (408), dans lequel chacune desdites étapes comporte les étapes :
la lecture de données (500) ;
la fourniture d'une indication (502) comportant une information suivant laquelle une données est lue ;
le décalage d'un registre de tâches (504) comportant une liste de canaux de transport, dans lequel ledit registre de tâches comporte une liste de canaux de transports devant être traités ;
le traitement desdites données (506) en fonction de valeurs de paramètres représentatives du canal de transport dans un registre fantôme indiqué en sortie dudit registre de tâche ; et
la génération d'une indication (508) comportant une information suivant laquelle des données traitées sont lues.

7. Un procédé selon la revendication 6 , dans lequel ladite étape de décalage est un décalage de type premier entré , premier sorti.

8. Un procédé selon l'une des revendications 6 ou 7, comportant en outre l'étape de programmation desdits registres fantômes

9. Un procédé selon l'une quelconque des revendications 6 à 8, dans lequel chacune des étapes de traitement comporte l'étape de commande de ladite lecture, de la génération de l'indication, et des étapes de traitement par une machine d'état.
